# EUROPEAN PATENT SPECIFICATION

(11) **EP 1 069 937 B1**
(45) Date of publication and mention of the grant of the patent: **26.04.2006**
(21) Application number: 99913737.5
(22) Date of filing: 30.03.1999
(51) Int. Cl.: B01D 53/86, B01D 53/94

(54) **METHOD FOR THE CONVERSION OF DINITROGEN OXIDE**
VERFAHREN ZUR KONVERTIERUNG VON DISTICKSTOFFOXID
PROCEDE DE CONVERSION D'OXYDE DE DIAZOTE

(30) Priority: 30.03.1998 NL 1008746
(43) Date of publication of application: 24.01.2001
(73) Proprietor: Stichting Energieonderzoek Centrum Nederland(ECN), 1755 LE Petten (NL)
(72) Inventor: RAK, Zbigniew, Stanislaw, NL-1825 KT Alkmaar (NL); VERHAAK, Michael, Johannes, Franciscus, Maria, NL-1815 DB Alkmaar (NL); BOS, Ariejan, NL-1704 VR Heerhugowaard (NL); CENTI, Gabriele, I-98165 Ganzirri (IT)
(74) Representative: van Westenbrugge, Andries
(86) International application number: PCT/NL1999/000190
(87) International publication number: WO 1999/049954

(56) References cited:
- US-A- 5 149 512
- US-A- 5 524 432

## Description

The invention relates to a method for the catalytic reduction of diriitrogen oxide (N₂O) in the presence of a zeolite as catalyst.

Dinitrogen oxide (N₂O) is a byproduct in the formation of adipic acid for the production of nylon and in the formation of nitric acid, occurs in the exhaust gases of motor vehicles which have internal combustion engines and is formed in off-gases at high temperature. Because dinitrogen oxide makes a 270 times greater contribution to the greenhouse effect than does carbon dioxide, a reduction in the emissions thereof is urgent from an environmental standpoint and a great deal of research is being carried out in this field.

From Catalysis Letters 44 (1997); J-C. Balzer AG Science Publishers, pages 271-274, it is known to reduce dinitrogen oxide by passing it with propene over a Fe-MFI or Cu-MFI catalyst. With this method the propene concentration is 1000 ppm and the dinitrogen oxide concentration 500 ppm and for the Fe-MFI catalyst a conversion of approximately 75 % is obtained at a temperature of approximately 400 °C and in the presence of water vapour.

From the 11 th International Congress on Catalysis-40th anniversary Studies in Surface Science and Catalysis vol. 101 (1996); Elsevier Science B.V., pages 641-650, it is known to decompose N₂O in the presence of a ZSM-5 catalyst such as Cu-, Fe- and Co-substituted ZSM-5 zeolites.

US-A 5 171 553 discloses the decomposition of N₂O to give nitrogen and oxygen by the use of a zeolite of the BETA, MOR, MFI, MEL or FER type which has been at least partially substituted by a metal compound of copper, cobalt, rhodium, iridiura, ruthenium or palladium.

US-A 4 571 329 and JP-A 08057262 disclose reduction of N₂O by ammonia using a zeolite substituted by iron. Furthermore, JP-A 09000884 discloses reduction of N₂O with an alcohol and/or a hydrocarbon using a zeolite substituted by iron.

Preferably, the ratio hydrocarbon N₂O is about equivalent. The experiments show conversions at 450°C.

US-A 5 149 512 and US-A-5524432 disclose a method for the catalytic reduction of NOx (.i.e. NO and NO₂) using methane as reducing agent and in the presence of oxygen and a metal-substituted zeolite having a silicon/aluminium ratio greater than 2.5.

Furthermore, a stoichiometric excess of methane over NO is preferred in order to ensure high removals of nitrogen oxides and carbon monoxide.

From Applied Catalysis B: Environmental, 2 (1993); Elsevier Science Publishers B.V., Amsterdam, pages 239-256, it is known to reduce NOx by passing it over a Co-, Mn-or Ni-ZSM-5 catalyst in the presence of methane.

Catalysis Today 22 (1994), Elsevier, pages 147-169 gives a review of catalysts and reducing agents for reducing the emission of nitrogen oxides (NO and NO₂), including metal-substituted ZSM-5 type zeolites and other zeolites in combination with methane, propane, propene and the like.

One aim of the present invention is to provide a method for the reduction of dinitrogen oxide at relatively low temperatures, with the conversion efficiency having a relatively low sensitivity to the presence of water (H₂O), oxygen (O₂), carbon monoxide (CO) and sulphur dioxide (concentrations below 200 ppm SO₂).

The invention relates to a method according to claim 1.

Preferably methane (CH₄), propane (C₃H₈) or LPG (mixture of C₃H₈ and C₄H₁₀), or a combination thereof, is used as reducing agent.

It has been found, surprisingly, that by using a saturated hydrocarbon, such as methane, propane or LPG, as reducing agent the reduction in the presence of a zeolite catalyst can be carried out at temperatures below 450°C and the sensitivity of the conversion is only slightly adversely affected by the presence of water. Furthermore, methane and propane are inexpensive raw materials, certainly compared with propene as described in Catalysis Letters 44 (1997), and the costs of the conversion consequently remain restricted. In particular, it has been found that an iron-substituted zeolite in the presence of methane and propane gives better conversion than other metal-substituted zeolites. Preferably, an Fe-ZSM-5 type zeolite is used as catalyst without the addition of expensive noble metals. Efficient conversion takes place at an SiO₂:Al₂O₃ ratio of less than 100, preferably of less than 65, and most preferentially of less than 40. A further advantage compared with the prior art is that the preparation of the Fe-ZSM-5 catalysts is technically simple. The iron-substituted zeolites display high stability as a function of time in the presence of gas components such as H₂O, O₂, CO, NH₃ and SO₂.

Preferably, the zeolite is at least partially exchanged with (NH₄)₂FE(SO₄)₂.6H₂O.

The invention will be explained in more detail with the aid of the following examples together with the appended figures.

In the figures:
Figure 1 shows the conversion activity of a catalyst D for N₂O without reducing agent in the absence and the presence of 2 % water,
Figure 2 shows the conversion activity of a catalyst D in the presence of 1500, 1000, 500 or 230 ppm C₃H₈ in addition to 6 % oxygen and 2 % water,
Figure 3 shows the stability of the N₂O conversion with catalyst D in the presence of 6 % O₂, 2 % H₂O and 1500 ppm C₃H₈ at 340 °C,
Figure 4 shows the effect of water on the stability of catalyst D in the presence of 6% O₂ and 125 ppm CH₄ at 360 °C.

In the following tests Fe-ZSM-5 catalysts have been prepared from Mohr's salts by means of ion exchange. The conversion of N₂O to N₂ and O₂ and the influence of 2 % water on the conversion has then been determined in III below. The effect of the reducing agent and the effect of the concentration thereof have also been determined in, respectively, IV and V. The stability of the catalyst and the effect of the SiO₂:Al₂O₃ ratio have been given in VI and VII below. The effect of ammonia on the catalytic reduction with and without methane has been determined in VIII.

### I. Preparation of Fe-ZSM-5 catalysts

The catalysts according to the present invention were produced by adding ZSM-5 powder (dried for 24 hours at 125°C) to a solution of (NH₄)₂Fe(SO₄)₂.6H₂O (Mohr's salt). The ion exchange conditions are indicated in Table 1.

**Table 1**

| | | Ion exchange conditions | |
|---|---|---|---|
| Catalyst | Powder | Solution | Parameters |
| A | 10 g NH₄ZSM5-27 | 1 litre 0.01M Fe | 1x8 h in N₂ atm at 80 °C |
| B | 10 g NH₄ZSM5-27 | 1 litre 0.01 M Fe | 2x8 h in N₂ atm at 80 °C |
| C | 10 g NH₄ZSM5-27 | 1 litre 0.01M Fe | 1x8 h at 80 °C |
| D | 10 g NH₄ZSM5-27 | 1 litre 0.01M Fe | 2x8 h at 80°C |
| E | 10 g NH₄ZSM5-55 | 1 litre 0.01M Fe | 1x8 h at 80 °C |

Following the ion exchange step, the suspensions were filtered through a Buchner funnel containing a strip of filter paper. If a second ion exchange step was carried out, the filter cake was left to stand overnight on the filter paper. In other cases the filter cake was introduced into 1 litre demineralised water and stirred for half an hour and then filtered off. The pulverulent catalysts were dried at 80 °C for 16 hours and then calcined at 550 °C for 5 hours.

### II. Test equipment

The conversion of dinitrogen oxide (N₂O) was studied in an automated micro-flow set-up, operating under atmospheric pressure. The following gases are available to the set-up: He (optionally with H₂O), NH₃, H₂, O₂, N₂, CO, CO₂ and CH₄. The gases O₂, N₂, CO₂ and CH₄ were determined with the aid of a Varian gas chromatograph model 3300, equipped with a methaniser, a TCD detector and a FID detector. N₂O and CO were determined using a Bomem FT infrared analyser model MB 100. The precursor was contained in a reactor made of pyrex glass having an internal diameter of 10 mm. The catalyst bed was covered with glass wool and a layer of glass beads. The height of the catalyst bed was 10 mm, whilst the gas flow was approximately 150 ml/min. The space velocity (SV) in this case was 11 500 h⁻¹. The requisite amount of precursor (0.5 - 0.71 mm fraction) was approximately 500 mg. The temperature was measured immediately below the catalyst bed with the aid of a Cr/Al thermocouple. During the tests 10 % and 1% C₃H₈, 4 % CH₄ and/or 0.5 % NH₃ in helium as carrier gas were mixed with 0.2 % N₂O in helium and 10% O₂ in helium. Prior to the conversion reaction of N₂O, the catalyst samples were flushed with helium for 15 minutes at 20 °C. In a mixture of 10 % O₂ in helium, the temperature was raised to 500 °C, the catalyst being kept at this temperature for two hours to remove adsorbed elements. The sample was cooled in helium to the initial temperature of the test and was exposed at this temperature for two hours to the reactants feed in order to prevent adsorption effects.

The general test conditions for the N₂O reduction tests are given in Table 2.

Quantitative determinations of the N₂O, C₃H₈, CH₄ and NH₃ concentrations were carried out by means of infrared analysis. When CO was present in the tested gas, the N₂O signals were corrected since the entire N₂O absorption band (2143-2222 cm⁻¹) is coincident with the CO absorption band (1970-2222 cm⁻¹). The contribution of CO to the N₂O band was calculated by extrapolation of the measured free portion of the CO band (that is to say 1970-2143 cm⁻¹). The extrapolation was based on previous measurements on pure CO. The deduction of the CO contribution from the values measured in the 2143-2222 cm⁻¹ band gives the corrected N₂O signal. The quantity of CO formed was less than 0.01 % for all determinations.

The conversion values for N₂O, C₃H₈, CH₄ and NH₃ are based on the infrared signals at 200 °C, that is to say the infrared signal of N₂O, C₃H₈, CH₄ and NH₃ in the feed, since there is still no conversion at this temperature. Signals somewhat below zero were measured after complete conversion of N₂O, C₃H₈, CH₄ or NH₃ had been achieved, and this was probably caused by small fluctuations in the background values and/or in the CO correction values. These small negative signal values resulted in conversion values of above 100 % (up to a maximum of 105 %). Therefore, the temperature at which there was no further increase in the conversion value was taken as T_{(100%)}, that is to say the temperature of complete conversion. The T_{(50%)} is the temperature at which 50 % of the ingoing N₂O is converted under the conditions as specified in Table 2.

**Table 2. General test conditions**

| | |
|---|---|
| Weight of the catalyst sample | 500 mg |
| Particle size | 0.50-0.71 mm |
| Gas flow rate | 150 ml/min |
| Spatial velocity of the gas per hour | |
| (GHSV) | approximately 11 500 h⁻¹ |
| Feed | 500 ppm N₂O, 6 % O₂, 2 % H₂O, |
| | 250 ppm - 1 % C₃H₈ or |
| | 125 ppm - 3 % CH₄ and |
| | 160 ppm - 500 ppm NH₃ with helium as |
| | the balance. |
| Total pressure | atmospheric |
| Bed temperature | 200 °C → 500 °C → 200 °C |
| | (in 20 °C steps every 15 min) |

### III. Conversion of N₂O without reducing agent

The test results of N₂O conversion with and without 2 % water over Fe-ZSM-5 catalysts A to D are given in Table 3.

It can be seen that the production of the catalysts in an N₂ atmosphere (A and B) instead of in air (C and D) has no influence on the N₂O conversion. An increase in the number of ion exchange steps from 1 to 2 results in a 10 to 20 °C shift towards lower temperatures in the N₂O conversion plots. The temperature for complete conversion, T_{(100%)}, was approximately 475°C (without water).

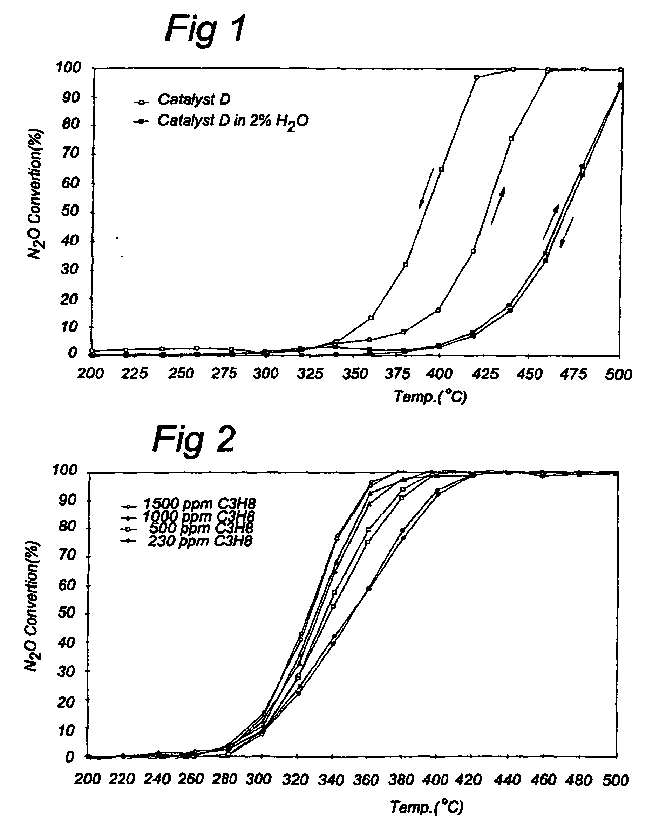

Figure 1 shows the conversion plots for the catalyst D in the absence of reducing agent with and without 2 % water. The presence of 2 % water shifts the T_{(100%)} to temperatures well above 500 °C. The hysteresis pattern, the non-coincidence of the upward and downward plots, is a characteristic property of the catalyst which is observed if no water is added.

**Table 3**

| Catalyst | N₂O T_{(50%)} (°C) | H₂O conc. (%) |
|---|---|---|
| A | 440 | 0 |
| B . | 430 | 0 |
| B | 485 | 2 |
| C | 440 | 0 |
| D | 425 | 0 |
| D | 465 | 2 |

### IV. Conversion of N₂O with propane, methane and carbon monoxide

Figure 2 shows the effect of the reducing agent C₃H₈ that was added in concentrations of 1500, 1000, 500 and 230 ppm to the N₂O using catalyst D. The increase in the conversion activity is striking: 1500 ppm C₃H₈ lowers the T_{(100%)} for N₂O in the presence of water from well above 500°C to about 380 °C.

Tests have shown that the addition of CH₄ increased the conversion to virtually the same extent as C₃H₈, T_{(100%)} being 400 °C with 3900 ppm CH₄.

Tests have also shown that the widely tested Cu- and Co-substituted ZSM-5 catalysts, which perform well in the decomposition of N₂O, perform poorly in the conversion of N₂O with propane or methane. The test results for N₂O conversion with 2 % water, 6 % O₂ and 1500 ppm C₃H₈ over Fe-ZSM-5 catalyst D, Cu-ZSM-5 and Co-ZSM-5 are shown in Table 4.

**Table 4**

| Catalyst | N₂O T_{(50%)} (°C) | C₃H₈ T_{(100%)} (°C) |
|---|---|---|
| D | 325 | 420 |
| Cu-ZSM-5 | 425 | 360 |
| Co-ZSM-5 | 430 | 480 |

The presence of carbon monoxide had a beneficial effect on the N₂O conversion over catalyst D. The T_{(100%)} reaction temperature was lowered from > 500°C to 460 and 480 °C with a CO concentration of, respectively, 980 and 500 ppm (including 6 % O₂ and 2 % H₂O).

### V. Effect of the concentration of the reducing agents propane and methane

Various concentrations of C₃H₈ and CH₄ were tested in the conversion of N₂O with catalyst D, the results of which tests are given in Table 5. The table shows that the addition of more hydrocarbon relative to N₂O (i.e. with an increasing hydrocarbon/N₂O ratio) the temperature at which 50 % N₂O conversion takes place is reduced. Further increase in the propane concentration from 1500 to 10 000 ppm (1 % V/V) gave a further limited improvement in the conversion activity.

**Table 5**

| Hydrocarbon conc. (ppm) | | N₂O T_{(50%)} (°C) | Hydrocarbon T_{(100%)} (°C) |
|---|---|---|---|
| C₃H₈: | 1500 | 325 | 380 |
| | 1000 | 330 | 360 |
| | 500 | 340 | 360 |
| | 230 | 350 | 320 |
| CH₄: | 3900 | 360 | 500 T_{(26%)} |
| | 1900 | 360 | 500 T_{(34%)} |
| | 900 | 365 | 500 T_{(45%)} |
| | 250 | 380 | 500 T_{(75%)} |
| | 125 | 415 | 440 |

### VI. Stability of the conversion

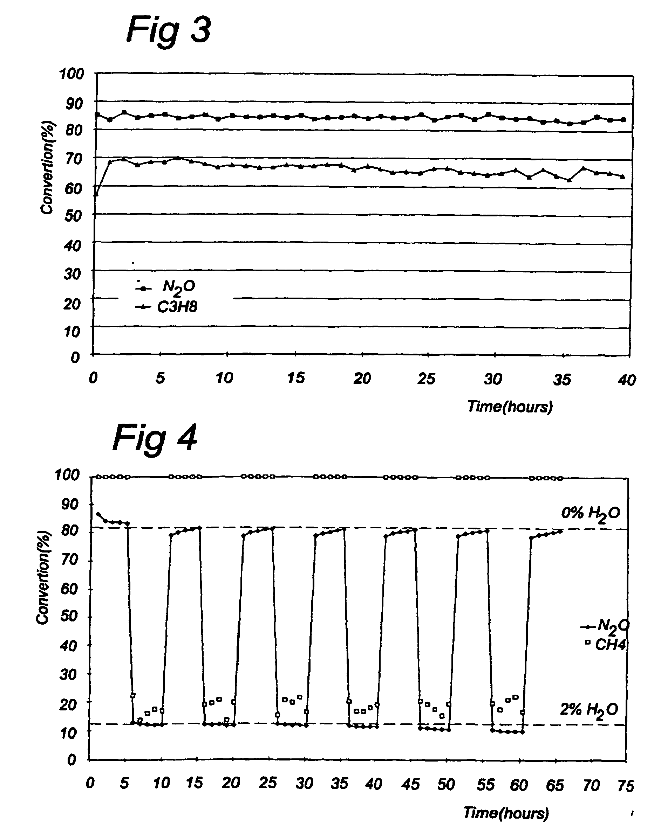

Catalyst D was tested for stability of the N₂O conversion in the presence of 1500 ppm C₃H₈ for 40 hours at 340 °C. The test results are shown in Figure 3. It can be seen from this figure that no significant decrease in the N₂O conversion takes place.

The presence of 200 ppm SO₂ gave rise to a moderate change in the N₂O conversion. No direct deactivation of the catalyst was observed on the addition of 160 ppm SO₂.

Catalyst D was also tested in the N₂O conversion in the presence of 125 ppm CH₄ for 65 hours at 360 °C. During this stability test there was alternating addition of 2 % water for periods of 5 hours. The test results which are shown in Figure 4 show that reversible deactivation by water takes place in the period tested.

### VII. Effect of the SiO₂:Al₂O₃ ratio

Table 6 shows the results of the experiments in which 500 ppm N₂O was reduced in the presence of 1500 ppm C₃H₈, 2 % H₂O and 6 % O₂ with catalyst C and E, that is to say containing a ZSM-5 zeolite having an SiO₂:Al₂O₃ ratio of, respectively, 27 and 55, both monosubstituted by Mohr's salt.

**Table 6**

| Catalyst | N₂O T(_{50%)} (°C) | CH₃H₈ T_{(100%)} (°C) |
|---|---|---|
| C | 325 | 420 |
| E | 345 | 500 T_{(96%)} |

It can be seen that the lower SiO₂:Al₂O₃ ratio of 27 resulted in an approximately 20 °C lower conversion temperature than that for the catalyst with an SiO₂:Al₂O₃ ratio of 55.

## Claims

1. Method for the catalytic reduction of dinitrogen oxide (N₂O) in the presence of a zeolite substituted by iron (Fe) as catalyst with the addition of a reducing agent, wherein the reducing agent comprises a saturated hydrocarbon (CₙH₂ₙ₊₂), **characterised in that** the ratio of hydrocarbon to dinitrogen oxide is 0.2 or larger and smaller or equal than 0.5 and **in that** the reduction takes place at a temperature of below 450°C.

2. Method according to Claim 1, **characterised in that** the hydrocarbon reducing agent used is methane (CH₄), propane (C₃H₈) or LPG (C₃H₈/C₄H₁₀) or a combination thereof.

3. Method according to Claim 1 or 2, **characterised in that** the zeolite is ZSM-5.

4. Method according to one of the preceding claims, **characterised in that** the SiO₂:Al₂O₃ ratio of the zeolite is less than 100.

5. Method according to Claim 4, **characterised in that** the SiO₂:Al₂O₃ ratio of the zeolite is less than 65.

6. Method according to Claim 4, **characterised in that** the SiO₂:Al₂O₃ ratio of the zeolite is less than /equal to 40.

7. Method according to one of the preceding claims, **characterised in that** the zeolite is at least partially exchanged with (NH₄)₂Fe(SO₄)₂.6H₂O.

8. Method according to one of the preceding claims, **characterised in that** the reduction takes place at a temperature of below 400°C.

9. Method according to one of the preceding claims, **characterised in that** the reduction takes place at a temperature of below 350°C.

## Patentansprüche

1. Verfahren zur katalytischen Reduktion von Distickstoffoxid (N₂O) in Anwesenheit eines Zeoliths, welcher durch Eisen (Fe) substituiert ist, als ein Katalysator, unter Zugabe eines Reduktionsmittels, wobei das Reduktionsmittel einen gesättigten Kohlenwasserstoff (CₙH₂ₙ₊₂) umfasst, **dadurch gekennzeichnet, dass** das Verhältnis von Kohlenwasserstoff zu Distickstoffoxid 0,2 oder mehr beträgt und kleiner oder gleich 0,5 ist, und dass die Reduktion bei einer Temperatur von weniger als 450 °C stattfindet.

2. Verfahren nach Anspruch 1, **dadurch gekennzeichnet, dass** das verwendete Kohlenwasserstoffreduktionsmittel Methan (CH₄), Propan (C₃H₈) oder LPG (C₃H₈/C₄H₁₀)
oder eine Kombination dieser ist.

3. Verfahren nach Anspruch 1 oder 2, **dadurch gekennzeichnet, dass** der Zeolith ZSM-5 ist.

4. Verfahren nach einem der vorangehenden Ansprüche, **dadurch gekennzeichnet, dass** das SiO₂:Al₂O₃ Verhältnis des Zeoliths weniger als 100 beträgt.

5. Verfahren nach Anspruch 4, **dadurch gekennzeichnet, dass** das SiO₂:Al₂O₃ Verhältnis des Zeoliths weniger als 65 beträgt.

6. Verfahren nach Anspruch 4, **dadurch gekennzeichnet, dass** das SiO₂:Al₂O₃ Verhältnis des Zeoliths weniger als 40 beträgt oder 40 entspricht.

7. Verfahren nach einem der vorangehenden Ansprüche, **dadurch gekennzeichnet, dass** der Zeolith wenigstens teilweise mit (NH₄)₂Fe(SO₄)₂•6H₂O) ausgetauscht ist.

8. Verfahren nach einem der vorangehenden Ansprüche, **dadurch gekennzeichnet, dass** die Reduktion bei einer Temperatur unter 400 °C stattfindet.

9. Verfahren nach einem der vorangehenden Ansprüche, **dadurch gekennzeichnet, dass** die Reduktion bei einer Temperatur von weniger als 350 °C stattfindet.

## Revendications

1. Procédé de réduction catalytique de l'oxyde nitreux (N₂O) en présence d'une zéolithe substituée par du fer (Fe) en tant que catalyseur, avec l'addition d'un agent réducteur, dans lequel l'agent réducteur comprend un hydrocarbure saturé (CₙH₂ₙ₊₂), **caractérisé en ce que** le rapport de l'hydrocarbure à l'oxyde nitreux est supérieur ou égal à 0,2 et inférieur ou égal à 0,5, et **en ce que** la réduction se déroule à une température inférieure à 450°C.

2. Procédé selon la revendication 1, **caractérisé en ce que** l'agent réducteur hydrocarbure utilisé est le méthane (CH₄), le propane (C₃H₈) ou LPG (C₃H₈/C₄H₁₀) ou une combinaison de ceux-ci.

3. Procédé selon la revendication 1 ou 2, **caractérisé en ce que** la zéolithe est ZSM-5.

4. Procédé selon l'une quelconque des revendications précédentes, **caractérisé en ce que** le rapport SiO₂:Al₂O₃ de la zéolithe est inférieur à 100.

5. Procédé selon la revendication 4, **caractérisé en ce que** le rapport SiO₂:Al₂O₃ de la zéolithe est inférieur à 65.

6. Procédé selon la revendication 4, **caractérisé en ce que** le rapport SiO₂:Al₂O₃ de la zéolithe est inférieur ou égal à 40.

7. Procédé selon l'une quelconque des revendications précédentes, **caractérisé en ce que** la zéolithe est au moins partiellement substituée par (NH₄)₂Fe(SO₄)₂.6H₂O.

8. Procédé selon l'une quelconque des revendications précédentes, **caractérisé en ce que** la réduction se déroule à une température inférieure à 400°C.

9. Procédé selon l'une quelconque des revendications précédentes, **caractérisé en ce que** la réduction se déroule à une température inférieure à 350°C.
